# EUROPÄISCHE PATENTSCHRIFT

(11) **EP 2 218 165 B1**
(45) Veröffentlichungstag und Bekanntmachung des Hinweises auf die Patenterteilung: **27.07.2016**
(21) Anmeldenummer: 08857555.0
(22) Anmeldetag: 14.11.2008
(51) Int. Cl.: H02M 3/338, H02M 1/32, H02M 3/335

(54) **STROMVERSORGUNGSANORDNUNG MIT ÜBERWACHUNG DER SEKUNDÄRSPANNUNG**
POWER SUPPLY ARRANGEMENT WITH SECONDARY VOLTAGE MONITORING
SYSTÈME D'ALIMENTATION EN COURANT AVEC CONTRÔLE DE LA TENSION SECONDAIRE

(30) Priorität: 04.12.2007 DE 102007058612
(43) Veröffentlichungstag der Anmeldung: 18.08.2010
(73) Patentinhaber: R. Stahl Schaltgeräte GmbH, 74638 Waldenburg (DE)
(72) Erfinder: FREY, Fritz, 74653 Künzelsau (DE)
(74) Vertreter: Rüger, Barthelt & Abel
(86) Internationale Anmeldenummer: PCT/EP2008/009642
(87) Internationale Veröffentlichungsnummer: WO 2009/071172

(56) Entgegenhaltungen:
- WO-A-02/060066
- US-A- 3 590 361
- US-A1- 2006 002 158

## Beschreibung

In zunehmendem Maße gehen die Bemühungen bei elektrischen Anlagen dahin, die Sicherheit zu erhöhen, indem zusätzlich Redundanz vorgesehen wird. Dies gilt insbesondere für den explosionsgefährdeten Bereich. Hier sollen gefährliche Betriebssituationen soweit wie möglich ausgeschlossen werden.

Im explosionsgeschützten Bereich können Gefährdungen auftreten, wenn auf den Leitungen, die in eine gefährdete Zone führen, Ströme und/oder Spannungen auftreten, die einen zündfähigen Funken erzeugen können. Andererseits ist bei entsprechenden Leistungen auch die Gefahr gegeben, dass Bauteile Oberflächentemperaturen erreichen können, die wiederum ein zündfähiges Gemisch zünden können. Beide Risiken steigen infolge von immer mehr Strom ziehende Verbraucher wie z. B. moderne Bussysteme.

Das Augenmerk gilt deswegen den Stromversorgungseinrichtungen und -anordnungen um sicher zu stellen, dass zusätzlich zu den normalen vorhandenen Kontrollen Mechanismen wirksam sind, um gefährliche Zustände auch dann auszuschließen, wenn ein Fehler in den standardmäßigen Regelkreisen aufgetreten ist.

Aus dem Stand der Technik sind Stromversorgungseinrichtungen bekannt, die nach dem Sperrwandler- oder nach dem Durchflusswandlerprinzip arbeiten. Diese Schaltungen verwenden Transformatoren mit galvanisch getrennten Wicklungen und dienen dazu, die Ausgangsspannung gegenüber der Eingangsspannung herunter oder herauf zu setzen. Diese Wandlerschaltungen enthalten Rückkopplungsmechanismen um Strom und/oder Spannung auf der Sekundärseite zu regeln.

Die Wandlerschaltungen enthalten primärseitig wenigstens einen gesteuerten Halbleiterschalter in Serie zu der Primärwicklung des Transformators um den entsprechenden Wechselstrom zu erzeugen.

Aus der US 3 590 361 ist eine Stromversorgungsanordnung mit galvanischer Trennung mit einem Stromversorgungseingang, einem Transformator, und einem gesteuerten Halbleiterschalter bekannt. Der Transformator weist eine Primärwicklung und eine davon galvanisch getrennte Sekundärwicklung auf. Der Halbleiterschalter weist wenigstens einen Steuereingang auf, der mit der Primärwicklung eine Serienschaltung bildet, die zu dem Stromversorgungseingang parallel liegt. Es ist außerdem in Gestalt einer Multivibratorschaltung eine steuerbare Ansteuerschaltung für den Halbleiterschalter vorgesehen, die für den Halbleiterschalter ein periodisches Steuersignal liefert. Das Steuersignal ist derart gesteuert, dass die Ausgangsspannung an der Sekundärwicklung lastunabhängig auf einem vorgegeben Sollwert gehalten wird. Dazu dient eine Regelschaltung, die eingangsseitig zu der Primärwicklung parallel liegt und deren Ausgangssignal auf den Schaltzustand des Halbleiter einem gesteuerten Halbleiterschalterschalters einwirkt, indem es das Puls/Pause-Verhältnis der an ihm anliegenden Spannung kontrolliert.

Ausgehend hiervon ist es Aufgabe der Erfindung, eine Stromversorgungsanordnung mit galvanischer Trennung zu schaffen, die eine erhöhte Sicherheit aufweist.

Diese Aufgabe wird mit einer Stromversorgungsanordnung mit den Merkmalen des Anspruches 1 gelöst.

Die neue Stromversorgungsanordnung enthält einen Stromversorgungseingang, über den sie mit elektrische Energie versorgt wird. In der Stromversorgungsanordnung ist ein Transformator mit einer Primärwicklung und einer davon galvanisch getrennten Sekundärwicklung vorgesehen. Ein gesteuerter Halbleiterschalter liegt mit der Primärwicklung in Serie, wobei die Serienschaltung zum Stromversorgungseingang parallel geschaltet ist.

Zur Erzeugung des erforderlichen Wechselstromsignals im Transformator ist eine Ansteuerschaltung für den Halbleiterschalter vorgesehen. Die Ansteuerschaltung liefert ein periodisches Steuersignal, das seinerseits derart geregelt ist, dass die Ausgangsspannung an der Sekundärspule konstant, bzw. auf einem vorgegeben veränderlichen Sollwert gehalten wird.

Zusätzlich zu dieser Regelungsanordnung oder Regelungsschaltung ist eine Spannungsbegrenzungsschaltung vorgesehen. Die Spannungsbegrenzungsschaltung liegt eingangsseitig zu der Primärwicklung parallel und erzeugt ein Ausgangssignal, das auf den Schaltzustand des Halbleiterschalters einwirkt derart, dass der Halbleiterschalter in eine Zustand überführt wird, in dem kein Wechselstrom für die Primärwicklung erzeugt wird, wenn die Spannung an der Primärwicklung einen vorbestimmten Grenzwert übersteigt.

Hierbei wird davon Gebrauch gemacht, dass bei der Wandlerschaltung die Spannung auf der Primärseite ein Abbild der Spannung auf der Sekundärseite ist, entsprechend dem Übersetzungsverhältnis des Transformators. Es besteht somit die Möglichkeit, durch Eingreifen auf der Primärseite die Spannung auf der Sekundärseite konstant zu halten.

Mit Hilfe dieser Anordnung und basierend auf dieser Erkenntnis werden zusätzliche galvanisch getrennte Rückführungen aus dem Sekundärkreis in den Primärkreis entbehrlich.

Ebenfalls vermindert sich der Aufwand, wenn an der Sekundärseite mehrere Verbraucher gespeist werden müssen, weil aufwendige wechselseitige Entkopplungen entbehrlich sind, da zentral und wirksam für sämtliche Verbraucher die Spannung auf der Sekundärseite stabil gehalten wird.

Die Schaltung eignet sich insbesondere für Anwendungen bei denen die Sekundärspannung im Bereich von 4 Volt liegt und entsprechende hohe Ströme auftreten. In diesem Bereich sind Spannungsregelungen schwieriger zu realisieren. Da auf der Primärseite die Spannung höher ist, kommt man in Bereiche, in denen Regelungen einfacher zu realisieren sind.

Der Halbleiterschalter kann ein Mosfet sein, beispielsweise auch ein Mosfet mit zwei Eingängen, so dass die normale Ansteuerung zu Erzeugung des Wechselstromsignals von der Ansteuerung durch die Spannungsbegrenzungsschaltung hochohmig getrennt ist.

Die steuerbare Steuerschaltung kann einen astabilen Multivibrator aufweisen, bei dem das Tastverhältnis zur Regelung der übertragenen Energie und/oder Spannung einstellbar ist, denn die Verstellung des Tastverhältnisses kann erfolgen, indem die Taktfrequenz konstant und das Tastverhältnis geregelt wird oder indem die Einschaltzeit konstant ist und die Frequenz verändert wird.

Zweckmäßigerweise enthält die Spannungsbegrenzungsschaltung ein Speicherglied, damit über eine vorbestimmte Zeit der Signalzustand erhalten bleibt.

Das Speicherglied kann von einem Kondensator gebildet sein. Der Kondensator kann mit Hilfe einer Diode derart von der Primärwicklung entkoppelt werden, dass die Primärwicklung in umgekehrter Polarität den Kondensator nicht entlädt.

Die Spannungsbegrenzungsschaltung enthält ein Referenzglied das beispielsweise von einem Shuntregulator gebildet ist oder eine Z-Diode oder einem vergleichbaren Element.

Die Spannungsbegrenzungsschaltung kann eine potentiale Umkehrstufe enthalten, die zwei bipolare Transistoren mit entgegengesetztem Leitungstyp aufweist. Jede andere Realisierung der Potentialumkehrstufe ist auch denkbar, soweit sie in der Lage ist den Signalzustand, der nicht mit der Schaltungsmasse verbundenen Spannungsbegrenzungsschaltung auf den Mosfet zu übertragen, der zumindest mit einer Elektrode mit der Schaltungsmasse ständig verbunden ist.

An die Sekundärseite kann eine Einweggleichrichterschaltung angeschlossen sein, die vorzugsweise einen Siebkondensator enthält.

Zusätzlich zu der Spannungsbegrenzungsschaltung kann auch eine Strombegrenzungsschaltung implementiert sein.

Es ist günstig wenn die Schaltungsanordnung nach dem Sperrwandlerprinzip arbeitet.

Die Spannungsüberwachungsschaltung kann einen Transistor enthalten, sowie ein selbsthaltendes Halbleiterschaltglied, beispielsweise einen Tyristor, der über den Transistor angesteuert wird. Die Arbeitsstrecke des Tyristors liegt parallel zu einer Steuerstrecke des Steuerbahnhalbleiterschalters.

Im Übrigen sind Weiterbildungen der Erfindung Gegenstand von Unteransprüchen.

Die nachfolgende Figurenbeschreibung erläutert Aspekte zum Verständnis der Erfindung. Weitere nicht beschriebene Details kann der Fachmann in der gewohnten Weise dem Schaltbild entnehmen, das insoweit die Figurenbeschreibung ergänzt. Es ist klar, dass eine Reihe von Abwandlungen an der Schaltung möglich sind.

Die genaue Dimensionierung der einzelnen Bauteile kann der Fachmann ohne Weiteres anhand der gegebenen Funktionserläuterung vornehmen.

Im Übrigen ist das Schaltbild vereinfacht und zeigt nur Elemente die zum Verständnis erforderlich sind.

Die einzige Figur der Zeichnung gibt das Schaltbild der erfindungsgemäßen Schaltungsanordnung wieder.

Die Figur zeigt das Prinzipschaltbild einer Schaltungsanordnung, die dazu vorgesehen ist, elektrische Verbraucher in einem explosionsgefährdeten Bereich mit Strom zu versorgen. Beispiele für solche Anwendungen sind Bussysteme. Hier fließt eine verhältnismäßig hoher Strom bei einer relativ niedrigen Spannung. Aus Sicherheitsgründen muss dafür gesorgt werden, dass auf der Stromversorgungsleitung, die in den explosionsgefährdeten Bereich führt, der Strom auch dann keine unzulässig hohen Werte annehmen darf, wenn ein Verbraucher versagt und zu hohen Strom ziehen würde. Andererseits dürfen die Geräte auch nicht dadurch gefährdet werden, dass auf der Sekundärseite wegen eines Ausfalls eines Verbrauchers eine zu hohe Speisespannung entstehen würde.

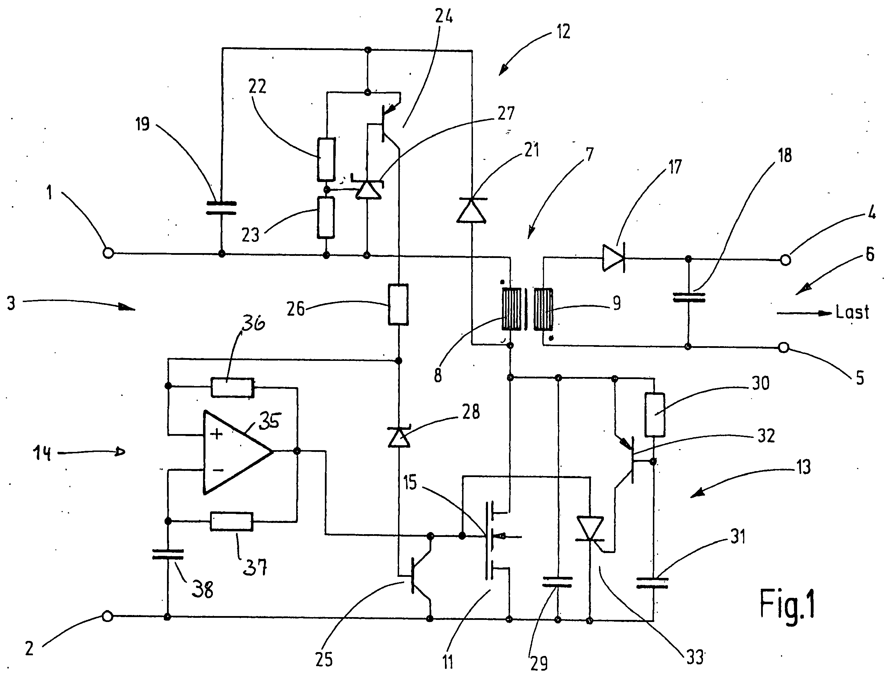

Normalerweise wird das Einhalten dieser Randbedingungen durch die inhärente Regelung bewerkstelligt. Bei der erfindungsgemäßen Schaltungsanordnung nach Fig. 1 ist darüber hinaus eine zusätzliche Redundanz vorgesehen, die eingreift, falls die normale Regelung versagen sollte.

Die Schaltungsanordnung weist zwei Eingangsklemmen 1 und 2 auf, die gemeinsam einen Stromversorgungseingang 3 bilden. Die elektrische Energie wird an Ausgangsklemmen 4 und 5 abgegeben, die zusammen einen Stromversorgungsausgang 6 darstellen. Der Stromversorgungseingang 3 ist von dem Stromversorgungsausgang 6 galvanisch über einen Transformator 7 getrennt, zu dem eine Primärwicklung 8 und eine Sekundärwicklung 9 gehören. Die notwendige Wechselspannung bzw. der notwendige Wechselstrom durch die Primärwicklung 8 9 wird mit Hilfe eines Mosfet 11 erzeugt. Der Primärwicklung 8 ist keine Freilaufdiode parallel geschaltet.

An die Primärwicklung 8 ist eine reduntante Spannungsbegrenzungsschaltung 12 angeschlossen sowie eine Strombegrenzungsschaltung 13. Mit beiden Schaltungsanordnungen wird die oben erläuterte Redundanz erreicht. Außerdem ist ein Oszillator 14 vorhanden.

Die Primärwicklung 8 und der Mosfet 11 bilden eine Serienschaltung, die zu den Eingängen 1 und 2 parallel geschaltet ist. Hierbei liegt das Source an der Eingangsklemme 2 und das Drain ist mit der Primärwicklung verbunden.

Der Mosfet 11 verfügt über ein Gate 15. Das Gate 15 liegt über einen Schutzwiderstand 16 an dem Oszillator 14 in Gestalt eines astabilen geregelten Multivibrators mit variablem Tastverhältnis.

Die Sekundärwicklung 9, deren Wicklungssinn gegenüber der Primärwicklung 8 mit den Punkten bezeichnet ist, ist mit einer Einweggleichrichterschaltung verbunden. Diese umfasst eine Gleichrichterdiode 17, die ein Ende der Sekundärwicklung 9 mit einem Siebkondensator 18 verbindet, dessen anderer Anschluss zu der Sekundärwicklung 9 zurückführt.

Der Siebkondensator 18 liegt damit parallel zu den beiden Ausgangsanschlüssen 4 und 5, an die die Last eingeschlossen ist.

Wie unschwer zu erkennen ist, handelt es sich bei der Gleichrichteranordnung um eine Halbwellengleichrichteranordnung. Der Mosfet 11 wird so betrieben, dass sich insgesamt eine Sperrwandlerschaltung ergibt, d.h. die Energieübertragung innerhalb des Transformators 7 geschieht während der Abschaltphase des Mosfet 11.

An sich arbeitet die Schaltungsanordnung geregelt, indem das Tastverhältnis, mit dem der Mosfet 11 angesteuert wird, entsprechend nachgeregelt wird.

Die Spannungsüberwachungsschaltung 12 hat den Zweck, unabhängig von der normalerweise wirksamen Regelung dafür zu sorgen, zwangsweise die Ausgangsspannung der Sekundärwicklung 9 zu begrenzen. Die Spannungsbegrenzungsschaltung 12 enthält einen Speicherkondensator 19, der über eine Entkopplungsdiode 21 zu der Primärwicklung 8 parallel geschaltet ist. Die Anordnung ist so getroffen, dass die Anode der Diode 21 mit dem Drain des Mosfet 11 verbunden ist, während der Kondensator 19 mit seinem von der Diode 21 abliegenden Ende an den Anschluss 1 angeschaltet ist.

Parallel zu dem Kondensator 19 liegt eine Serienschaltung aus zwei ohmschen Widerständen 22 und 23. Außerdem gehört zu der Spannungsbegrenzungsschaltung 12 ein bipolarer PNP-Transistor 24 sowie ein bipolarer NPN-Transistor 25. Der Transistor 24 liegt mit seinem Emitter an der Kathode der Diode 21, während der Kollektor über einen Widerstand 26 mit der Schaltungsmasse 2 und eine Z-Diode 27 mit der Basis des Transistors 25 verbunden ist. Ein Shuntregulator 28 liegt mit seinen Hauptstreckenanschlüssen zwischen der Basis des Transistors 24 und dem heißen Ende der Primärwicklung 8 bzw. dem Eingangsanschluss 1. Der Steueranschluss des Shuntregulators 28 ist an die Verbindungsstelle zwischen den beiden ohmschen Widerständen 22 und 23 angeschaltet. Die beiden Widerstände 22 und 23 definieren auf diese Weise die Schaltschwelle, ab der der Shuntregulator 28 leitend wirkt.

Der Transistor 25 ist schließlich mit seinem Kollektor an dem Gate 15 angeschlossen während der Emitter an dem Source des Mosfet 11 bzw. dem Eingangsanschluss 2 liegt.

Die Strombegrenzungseinrichtung 13 umfasst einen Kondensator 29, der parallel zu der Leistungsstrecke des Mosfet 11 liegt, d.h. der Kondensator 29 liegt einends an dem Source und anderenends an dem Drain. Ferner ist zu dem Kondensator 29 ein RC-Glied, bestehend aus einem Widerstand 30 und einem Kondensator 31, parallel geschaltet.

Parallel zu dem Widerstand 30 liegt die Steuerstrecke eines bipolaren PNP-Transistors 32, dessen Emitter mit dem Drain des Mosfet 11 in Verbindung steht.

Über den Kollektor des Transistors 32 wird ein Tyristor 33 gesteuert, dessen Steueranschluss mit dem Kollektor des Transistors 32 verbunden ist. Die Anode des Tyristors 33 liegt an dem Gate 15 und die Kathode ist an dem Source des Mosfet 11 angeschlossen. Der Tyristor 33 liegt damit parallel zu der Leistungsstrecke des Mosfet 11.

Die insoweit beschriebene Schaltung arbeitet wie folgt:
Im Normalbetrieb sorgt die Ansteuerschaltung für den Mosfet 11 dafür, dass dieser mit einem Rechteckerpuls beaufschlagt wird, wodurch der Mosfet 11 über das Gate 14 periodisch auf und zu gesteuert wird. Im leitenden Zustand erzeugt der Mosfet 11 einen Strom durch die Primärwicklung 8. Im abgeschalteten Zustand wird die während der Leitungsphase des Mosfet 11 in der Primärwicklung 8 gespeicherte magnetische Energie auf die Sekundärwicklung 9 übertragen, so dass die angeschaltete Last mit Strom versorgt wird.

Durch Variation des Tastverhältnisses des Pulses der in das Gate 15 gelangt, wird sichergestellt, dass bei gegebener bzw. variabler Last an dem Ausgangsanschluss 6 die Spannung über den Siebkondensator 18 konstant gehalten wird.

Während der Freilaufphase, d.h. wenn der Mosfet 11 abgeschaltet ist, reflektiert der Strom durch die Primärwicklung 8 und die dort auftretende Spannung die Strom- und Spannungssituation an der Sekundärwicklung 9.

Im Normalbetrieb entsteht während der Freilaufphase an der Primärwicklung 8 eine Spannung, die dazu führt, dass über die Diode 21 der Siebkondensator 19, der als Integrator wirkt, aufgeladen wird. Die am Kondensator 19 anstehende Spannung wird über die Teilerwiderstände 22, 23 auf einen entsprechenden Wert herunter geteilt, wie er sich aus der nachfolgenden Funktionsbeschreibung ergibt. Im Normalbetrieb ist die Spannung ausreichend hoch, damit der Shuntregulator 28 leitend wird und somit einen Basisstrom für den Transistor 24 erzeugt. Der somit aufgesteuerte Transistor 24 erzeugt einen Spannungsabfall an dem Widerstand 26 der ein Abbild der Spannung auf der Sekundärseite des Transformators 7 ist. Im Normalbetrieb bleibt die Z-Diode 27 gesperrt. Erst wenn aufrund einer Störung auf der Sekundärseite und einer Störung des Oszillators 14 die Spannung zu hoch werden sollte und die Schaltschwelle der Z-Diode 27 überschreitet, wird zusätzlich ein Basisstrom für den Transistor 25 erzeugt. Der Transistor 25 wird aufgesteuert und schließt das Gate 15 des Mosfet 11 gegen Masse kurz. Der Mosfet 11 ist damit gesperrt. Der Sperrzustand bleibt erhalten, bis die Spannung an dem Kondensator 19 zusammen mit der Spannung an den Eingangsanschlüssen 1, 2 einen Wert erreicht, der kleiner ist als der Schwellwert der Z-Diode 27.

Wie sich aus der Zeichnung unschwer ergibt, ist das Aufsteuern des Transistors 24 von der Eingangsspannung an den Klemmen 1, 2 unabhängig. Der Leitzustand des Transistors 24 wird ausschließlich über die Spannung an dem Integrationskondensator 19 in Verbindung mit dem Shuntregulator 28 geregelt. In die Steuerspannung für den Transistor 25 geht die Eingangsspannung allerdings ein.

Wenn aus dem Strom, den der Transistor 24 liefert, keine Steuerspannung für den Oszillator 14 abgeleitet werden soll, kann die Z-Diode 27 entfallen und die Teilerwiderstände 22, 23 werden so dimensioniert, dass der Shuntregulator 28 erst aufmacht, wenn die Schwelle für die zulässige Spannung an der Primärwicklung 8 nach oben überschritten wird, was einer entsprechenden Überspannung an der Sekundärwicklung 9 im Freilaufzustand entspricht.

Nach einer vorgegebenen Zeit, die sich letztlich aus der Zeitkonstanten ergibt, die der Kondensator 19 in Verbindung mit den beiden Widerständen 22, 23 sowie dem Kollektorstrom des Transistors 24 ergibt, sinkt die Spannung unter die Schwellspannung der Z-Diode 27 und der Transistor 25 geht in den Sperrzustand über, so dass wieder Taktimpulse in den Mosfet 11 gelangen können. Der Sperrschwinger nimmt seine Funktion wieder auf. Sollte die Überspannung wieder auftreten wiederholt sich das soeben erläuterte Wechselspiel.

Bei entsprechend kleiner Zeitkonstanten der Ansteuerseite des Transistors 24 kann dieses Eingreifen auch innerhalb eines Impulses verschwinden, mit dem der Mosfet 11 in den leitenden Zustand gesteuert wird.

In diesem Falle kann der astabile Multivibrator 14, mit dem das Eingangssignal für den Mosfet 11 erzeugt wird, eine konstante Frequenz und ein konstantes Tastverhältnis haben. Die Impulslänge wird letztlich dann durch die Spannungsbegrenzungsschaltung 12 festgelegt, indem der anstehende Puls über die Spannungsbegrenzungsschaltung 12 periodisch unterdrückt wird.

Wie oben bereits angedeutet, stellt während der Sperrphase der Spannungsverlauf an der Primärwicklung ein Maß für den auf der Sekundärseite fließenden Strom dar.

Während der Einschaltphase des Stroms durch die Primärwicklung 8 wird in den Transformator 7 magnetische Energie eingespeist. Die eingespeiste Energie ist proportional der Induktivität der Primärwicklung und der Zeitdauer über die der Mosfet 11 eingeschaltet ist.

Während der Abschaltphase wird die Energie in die Sekundärspule übertragen, wobei der Strom, den die Sekundärspule an die Verbraucher abgibt, während der Freilaufzeit in Verbindung mit dem in Serie liegenden Kondensator 29 einen charakteristischen Zeitverlauf zeigt.

Je größer der Strom ist, umso größer wird die Ladeschlussspannung an dem Kondensator 29 sein, bevor der Mosfet 11 wieder in den leitenden Zustand übergeht. Tritt eine übermäßige Stromentnahme auf, wird die Spannung an dem Kondensator 29 so groß werden, dass sie größer ist als die Basisemitterspannung des Transistors 32 zuzüglich der Spannung an der Steuerstrecke des Tyristors 33. Dadurch wird der Transistor 32 leiten und in der Folge auch der Tyristor 33. Da der Tyristor 33 parallel zur Steuerstrecke des Feldeffekttransistors 11 liegt, schließt hier das Gate 15 gegenüber des Source kurz und schaltet den Transistor 11 ab. Hiermit wird dem Mosfet 11 die Möglichkeit genommen den Strom durch die Primärwicklung 8 wieder einzuschalten.

Der Widerstand 30 arbeitet im Übrigen in Verbindung mit dem Kondensator 31 als Tiefpass, um einen Mittelwert des Spannungsverlaufes zu bilden, der an dem Kondensator 29 auftritt, da dieser beim Einschalten des Mosfet 11 sofort schlagartig entladen wird.

Der Oszillator 14 arbeitet als astabiler Multivibrator, der spannungsgesteurt ist. Er enthält als aktive Baugruppe einen Differenzverstärker 35 mit einem invertierenden und einem nicht invertierenden Eingang. Der nicht invertierende Eingang ist über einen Rückkopplungswiderstand 36 mit dem Ausgang des Differenzverstärkers 35 verbunden um ein Schmitt-Trigger-Verhalten zu erzeugen. Einen Gegenkopplungswiderstand 37 verbindet den Ausgang mit dem invertierenden Eingang, der im Übrigen weiterhin über einen Siebkondensator 38 mit der Schaltungsmasse entsprechend dem Anschluss 2 verbunden ist. Der Ausgang des Differenzverstärkers 35 ist an das Gate 15 des Mosfet 11 angeschlossen. Die Steuerspannung erhählt der Oszillator 14, indem der nicht invertierende Eingang des Differenzverstärkers 35 über den Widerstand 26 mit dem Kollektor des Transistors 24 verbunden ist.

Die Spannung an dem Widerstand 26, dort wo er an dem Kollektor des Transistors 24 angeschlossen ist, entspricht damit der Summe der Spannungen, die an dem Eingang 3 anliegt, zuzüglich der Spannung an dem Kondensator 19.

Die Funktionsweise eines solchen astabilen Multivibrators 14 ist bekannt und braucht deswegen nur pauschal erläutert zu werden:
Im schwingenden Zustand wird bei durchgesteuertem Differenzverstärker 35 über den Widerstand 37 der Kondensator 38 aufgeladen. Sobald diese Spannung über der Steuerspannung an dem nicht invertierenden Eingang liegt, wird der Differenzverstärker 35 abgeschaltet, der mit Hilfe des Widerstands 36 eine Schmitt-Trigger-Charakteristik bekommt. Bei abgeschaltetem Differenzverstärker 35 wird der Kondensator 38 über den Widerstand 37 vom Ausgang des Differenzverstärkers 35 her entladen. Das Einschalten der Eingangs-Ausgangsspannung wiederholt sich sobald die Spannung an dem Kondensator 38 weit genug abgesunken ist.

Dieses Spiel wiederholt sich periodisch.

Da das Integrationsglied aus dem Widerstand 37 und dem Kondensator 38 konstant ist, ändert sich das Tastverhältnis entsprechend der Eingangsspannung, die an dem nicht invertierenden Eingang anliegt.

Ersichtlicherweise wird der Oszillator 14, der den Leistungshalbleiter steuert, um den Primärstrom in dem Übertrager 7 periodisch ein und aus zu schalten, mit Hilfe eines Oszillators 14 angesteuert, der seine Steuerspannung ebenfalls aus der Primärwicklung 8 bekommt. Es ist somit eine dritte Wicklung auf dem Übertrager 7 entbehrlich, um über eine solche Rückkopplungswicklung, wie sie aus dem Stand der Technik hinreichend bekannt ist, den Sperrschwinger anzusteuern. Wird die Steuerspannung bei dem erfindungsgemäßen Sperrschwinger unmittelbar aus der Spannung abgeleitet.

Die erläuterte erfindungsgemäße Schaltung enthält insgesamt drei Baugruppen in Gestalt der Spannungsüberwachung 12, der Stromüberwachung 13 und des astabilen Multivibrators 14. Diese Baugruppen sind voneinander unabhängig insofern, als die Schaltung ohne die Stromüberwachung 13 und ohne die Spannungsüberwachung 12 nur mit dem Oszillator 14 ausgeführt werden kann.

Andererseits kann der Oszillator 14 durch einen Oszillator ersetzt werden, der mit einer Rückkopplungswicklung auf den Übertrager 7 arbeitet. Auf einer solchen Oszillatorschaltung können unabhängig voneinander die Spannungsüberwachungsschaltung 12 und/oder die Stromüberwachungsschaltung 13 eingesetzt werden. Welche dieser Schaltungen verwendet wird, richtet sich nach dem gewünschten Maß an Sicherheit.

Eine Sperrwandlerschaltung arbeitet mit einem Transformator, der lediglich eine Primär- und eine Sekundärwicklung aufweist. Der Transformator enthält keine Rückkopplungswicklung für den Sperrschwinger.

Die Steuerspannung für den Oszillator wird aus der Primärspannung des Transformators abgeleitet, und zwar während der Freilaufphase.

Ferner ist eine Spannungsüberwachungsschaltung vorgesehen, die unabhängig vom Oszillator arbeitet und die Ausgangsspannung des Oszillators unterdrückt, wenn die Spannung am Ausgang des Sperrwandlers zu groß wird.

Eine Stromüberwachungsschaltung arbeitet unabhängig von dem Oszillator und der Spannungsüberwachungsschaltung und unterdrückt die Impulse für den Leistungstransistor, wenn der Strom an der Ausgangsseite ein vorgegebenes Maß überschreitet.

Die Überwachungsschaltungen arbeiten praktisch leistungslos, so dass keine besonderen Kühlmaßnahmen erforderlich sind.

## Patentansprüche

1. Stromversorgungsanordnung mit galvanischer Trennung, insbesondere in explosionsgeschützter Ausführung,
mit einem Stromversorgungseingang (3),
mit einem Transformator (7), der eine Primärwicklung (8) und eine davon galvanisch getrennte Sekundärwicklung (9) aufweist,
mit einem gesteuerten Halbleiterschalter (11), der wenigstens einen Steuereingang (15) aufweist und der mit der Primärwicklung (8) eine Serienschaltung bildet, die zu dem Stromversorgungseingang (3) parallel liegt,
mit einer steuerbaren Ansteuerschaltung (14) für den Halbleiterschalter (11), die einen Oszillator (14) enthält und, für den Halbleiterschalter (11) ein periodisches Steuersignal liefert, das derart gesteuert ist, dass die Ausgangsspannung an der Sekundärwicklung (9) lastunabhängig auf einem vorgegeben Sollwert gehalten wird,
**dadurch gekennzeichnet, dass** die Stromversorgungsanordnung mit einer Spannungsüberwachungs- und -begrenzungsschaltung (12) ausgerüstet ist, die eingangsseitig zu der Primärwicklung (8) parallel liegt und deren Ausgangssignal auf den Schaltzustand des Halbleiterschalters (11) einwirkt, derart, dass der Halbleiterschalter (11) in einen stationären Zustand überführt wird, in dem er keinen Wechselstrom an der Primärwicklung (8) erzeugt, wenn die Spannung an der Primärwicklung (8) einen vorbestimmten Grenzwert überstiegen hat,
indem die Spannungsüberwachungs und -begrenzungsschaltung (12) unabhängig vom Oszillator arbeitet die Ausgangsspannung des Oszillators unterdrückt, wenn die Spannung am Ausgang der Stromversorgungsanordnung zu groß wird.

2. Stromversorgungsanordnung nach Anspruch 1, **dadurch gekennzeichnet, dass** die Primärwicklung (8) mehr oder weniger Windungen aufweist als die Sekundarwicklung (9).

3. Stromversorgungsanordnung nach Anspruch 1, **dadurch gekennzeichnet, dass** der gesteuerte Halbleiterschalter (11) ein Mosfet ist.

4. Stromversorgungsanordnung nach Anspruch 1, **dadurch gekennzeichnet, dass** die steuerbare Steuerschaltung (14) einen astabilen Multivibrator aufweist.

5. Stromversorgungsanordnung nach Anspruch 4, **dadurch gekennzeichnet, dass** der Multivibrator (14) eine konstante Taktfrequenz aufweist und in dem Tastverhältnis regelbar ist.

6. Stromversorgungsanordnung nach Anspruch 4, **dadurch gekennzeichnet, dass** der Multivibrator (14) eine variable Frequenz aufweist und den dem Tastverhältnis regelbar ist.

7. Stromversorgungsanordnung nach Anspruch 1, **dadurch gekennzeichnet, dass** die Spannungsbegrenzungsschaltung (12) ein Speicherglied (19) aufweist.

8. Stromversorgungsanordnung nach Anspruch 7, **dadurch gekennzeichnet, dass** das Speicherglied (19) von einem Kondensator gebildet ist.

9. Stromversorgungsanordnung nach Anspruch 1, **dadurch gekennzeichnet, dass** die Spannungsbegrenzungsschaltung (12) über eine Diode (21) mit der Primärwicklung (8) verbunden ist.

10. Stromversorgungsanordnung nach Anspruch 1, **dadurch gekennzeichnet, dass** die Spannungsbegrenzungsschaltung (12) ein Referenzglied (28) enthält.

11. Stromversorgungsanordnung nach Anspruch 10, **dadurch gekennzeichnet, dass** das Referenzglied (28) von einem Shuntregulator,gebildet ist.

12. Stromversorgungsanordnung nach Anspruch 1, **dadurch gekennzeichnet, dass** die Spannungsbegrenzungsschaltung (12) eine Potentialumkehrstufe (24,_25) enthält, die zwei bipolare Transistoren mit entgegengesetztem Leitungstyp aufweist.

13. Stromversorgungsanordnung nach Anspruch 1, **dadurch gekennzeichnet, dass** an die Sekundärseite (9) eine Einweggleichrichterschaltung (17) angeschlossen ist, die vorzugsweise wenigstens einen Siebkondensator (18) enthält.

14. Stromversorgungsanordnung nach Anspruch 1, **dadurch gekennzeichnet, dass** zusätzlich eine Begrenzungsschaltung (13) für den Strom vorgesehen ist.

15. Stromversorgungsanordnung nach Anspruch 1, **dadurch gekennzeichnet, dass** sie nach dem Sperrwandlerprinzip arbeitet.

## Claims

1. Power supply arrangement having galvanic isolation, in particular with an explosion-proof design,
having a power supply input (3),
having a transformer (7) which has a primary winding (8) and a secondary winding (9) which is galvanically isolated therefrom,
having a controlled semiconductor switch (11) which has at least one control input (15) and which forms a series connection with the primary winding (8), said series connection being in parallel with the power supply input (3),
having a controllable control circuit (14) for the semiconductor switch (11) which contains an oscillator (14) and sends an intermittent control signal for the semiconductor switch (11), said control signal being controlled in such a way that the output voltage at the secondary winding (9) is held at a predetermined set value regardless of the load, **characterised in that** the power supply arrangement is equipped with a voltage monitoring and limiting circuit (12) which is in parallel with the primary winding (8) on the input side and the output signal of which influences the switching state of the semiconductor switch (11) in such a way that the semiconductor switch (11) is transferred into a stationary state in which it does not produce any alternating current at the primary winding (8) if the voltage has exceeded a predetermined threshold value at the primary winding (8),
wherein the voltage monitoring and limiting circuit (12) works independently from the oscillator and suppresses the output voltage of the oscillator if the voltage is too high at the output of the power supply arrangement.

2. Power supply arrangement according to claim 1, **characterised in that** the primary winding (8) has more or fewer windings than the secondary winding (9).

3. Power supply arrangement according to claim 1, **characterised in that** the controlled semiconductor switch (11) is a MOSFET.

4. Power supply arrangement according to claim 1, **characterised in that** the controllable control circuit (14) has an astable multivibrator.

5. Power supply arrangement according to claim 4, **characterised in that** the multivibrator (14) has a constant clock frequency and is able to be adjusted in the duty cycle.

6. Power supply arrangement according to claim 4, **characterised in that** the multivibrator (14) has a variable frequency and is able to be regulated to the duty cycle.

7. Power supply arrangement according to claim 1, **characterised in that** the voltage limiting circuit (12) has a storage element (19).

8. Power supply arrangement according to claim 7, **characterised in that** the storage element (19) is formed of a capacitor.

9. Power supply arrangement according to claim 1, **characterised in that** the voltage limiting circuit (12) is connected to the primary winding (8) by means of a diode (21).

10. Power supply arrangement according to claim 1, **characterised in that** the voltage limiting circuit (12) contains a reference element (28).

11. Power supply arrangement according to claim 10, **characterised in that** the reference element (28) is formed of a shunt regulator.

12. Power supply arrangement according to claim 1, **characterised in that** the voltage limiting circuit (12) contains a potential inverter (24, 25) which has two bipolar transistors with the opposite type of conductivity.

13. Power supply arrangement according to claim 1, **characterised in that** a half-wave rectifier circuit (17) is connected to the secondary side (9), said circuit preferably containing at least one filter capacitor (18).

14. Power supply arrangement according to claim 1, **characterised in that** a limiting circuit (13) is additionally provided for the power.

15. Power supply arrangement according to claim 1, **characterised in that** it works according to the flyback converter principle.

## Revendications

1. Dispositif d'alimentation en courant à séparation galvanique, en particulier en version antidéflagrante, comprenant une entrée d'alimentation en courant (3), un transformateur (7) qui comporte un enroulement primaire (8) et un enroulement secondaire (9) séparé galvaniquement de celui-ci, un interrupteur commandé à semi-conducteurs (11) qui comporte au moins une entrée de commande (15) et qui forme avec l'enroulement primaire (8) un montage en série disposé en parallèle à l'entrée d'alimentation en courant (3), un circuit d'amorçage commandable (14) pour l'interrupteur à semi-conducteurs (11), lequel circuit comporte un oscillateur (14) et fournit pour l'interrupteur à semi-conducteurs (11) un signal de commande périodique qui est commandé de façon que la tension de sortie au niveau de l'enroulement secondaire (9) soit maintenue, indépendamment de la charge, à une valeur de consigne prédéfinie, **caractérisé en ce que** le dispositif d'alimentation en courant est équipé d'un circuit de contrôle et de limitation de tension (12) qui, côté entrée, est disposé en parallèle à l'enroulement primaire (8) et dont le signal de sortie agit sur l'état de commutation de l'interrupteur à semi-conducteurs (11), de façon que l'interrupteur à semi-conducteurs (11) soit transféré dans un état stationnaire où il ne produit pas de courant alternatif au niveau de l'enroulement primaire (8) quand la tension au niveau de l'enroulement primaire (8) a excédé une valeur limite prédéterminée, par le fait que le circuit de contrôle et de limitation de tension (12) fonctionne indépendamment de l'oscillateur et supprime la tension de sortie de l'oscillateur quand la tension à la sortie du dispositif d'alimentation en courant est trop élevée.

2. Dispositif d'alimentation en courant selon la revendication 1, **caractérisé en ce que** l'enroulement primaire (8) comporte plus ou moins de spires que l'enroulement secondaire (9).

3. Dispositif d'alimentation en courant selon la revendication 1, **caractérisé en ce que** l'interrupteur commandé à semi-conducteurs (11) est un transistor à effet de champ métal-oxyde-semi-conducteurs (MOSFET).

4. Dispositif d'alimentation en courant selon la revendication 1, **caractérisé en ce que** le circuit de commande commandable (14) comporte un multivibrateur astable.

5. Dispositif d'alimentation en courant selon la revendication 4, **caractérisé en ce que** le multivibrateur (14) présente une fréquence élémentaire constante et possède un facteur d'utilisation réglable.

6. Dispositif d'alimentation en courant selon la revendication 4, **caractérisé en ce que** le multivibrateur (14) présente une fréquence variable et possède un facteur d'utilisation réglable.

7. Dispositif d'alimentation en courant selon la revendication 1, **caractérisé en ce que** le circuit de limitation de tension (12) comporte un élément de mémoire (19).

8. Dispositif d'alimentation en courant selon la revendication 7, **caractérisé en ce que** l'élément de mémoire (19) est formé par un condensateur.

9. Dispositif d'alimentation en courant selon la revendication 1, **caractérisé en ce que** le circuit de limitation de tension (12) est relié à l'enroulement primaire (8) par l'intermédiaire d'une diode (21).

10. Dispositif d'alimentation en courant selon la revendication 1, **caractérisé en ce que** le circuit de limitation de tension (12) renferme un élément de référence (28).

11. Dispositif d'alimentation en courant selon la revendication 10, **caractérisé en ce que** l'élément de référence (28) est formé par un régulateur shunt.

12. Dispositif d'alimentation en courant selon la revendication 1, **caractérisé en ce que** le circuit de limitation de tension (12) renferme un étage d'inversion de potentiel (24, 25) qui comporte deux transistors bipolaires à type de conductivité opposée.

13. Dispositif d'alimentation en courant selon la revendication 1, **caractérisé en ce qu'**au côté secondaire (9) est raccordé un circuit redresseur unidirectionnel (17) qui renferme de préférence au moins un condensateur de filtrage (18).

14. Dispositif d'alimentation en courant selon la revendication 1, **caractérisé en ce qu'**un circuit de limitation (13) pour le courant est prévu à titre supplémentaire.

15. Dispositif d'alimentation en courant selon la revendication 1, **caractérisé en ce qu'**il fonctionne selon le principe d'un convertisseur à transfert direct.
